Europäisches Patentamt

European Patent Office

Office européen des brevets

(19)

(11) Numéro de publication : **0 022 420**
**B1**

(12) **FASCICULE DE BREVET EUROPÉEN**

(45) Date de publication du fascicule du brevet :
**13.07.83**

(21) Numéro de dépôt : **80420081.4**

(22) Date de dépôt : **02.07.80**

(51) Int. Cl.³ : **C 09 K   3/14**, C 04 B 35/10

(54) Procédé de préparation d'un produit abrasif, à base d'alumine et d'oxycarbures d'aluminium et utilisation d'un tel abrasif.

(30) Priorité : **05.07.79 FR 7917935**

(43) Date de publication de la demande :
**14.01.81 Bulletin 81/02**

(45) Mention de la délivrance du brevet :
**13.07.83 Bulletin 83/28**

(84) Etats contractants désignés :
**AT BE CH DE GB IT LI LU NL SE**

(56) Documents cités :
**DE B 1 058 423
DE C 69 030
FR A 1 100 434
FR A 2 349 633**

**J. Amer. Ceram. Soc., Ceramic Abstracts, (1956),
39 no. 1, pages 1-11**

**Le dossier contient des informations techniques présentées postérieurement au dépôt de la demande et ne figurant pas dans le présent fascicule.**

(73) Titulaire : **Société Française d'Electrométallurgie SOFREM
10, rue Général Foy
F-75008 Paris (FR)**

(72) Inventeur : **Daire, Marc
11, rue des Bonnes Gens
F-67400 Illirsch-Graffenstaden (FR)**
Inventeur : **Larrere, Yves
21, Place Byron
F-67200 Strasbourg (FR)**
Inventeur : **Mangin, André
25, Avenue de Chambéry
F-74000 Annecy (FR)**

(74) Mandataire : **Pascaud, Claude et al
PECHINEY UGINE KUHLMANN
28, rue de Bonnel
F-69003 Lyon (FR)**

Jouve, 18, rue St-Denis, 75001 Paris, France

## Procédé de préparation d'un produit abrasif, à base d'alumine et d'oxycarbures d'aluminium et utilisation d'un tel abrasif

La présente invention concerne un procédé de préparation d'un nouveau produit abrasif, à haute dureté, à base d'alumine et d'oxycarbures d'aluminium.

La majorité des produits de haute dureté, et, en particulier des abrasifs utilisés actuellement, sont à base, soit de carbure de silicium, soit d'alumine frittée ou électrofondue (corindon), ou de mélanges d'alumine et de zirconium électrofondus (corindon à la zircone). Mais, il existe de nombreux cas où l'on souhaiterait disposer de produits résistant à l'usure, et en particulier d'abrasifs plus performants sans pour autant faire appel aux produits tels que le diamant ou le nitrure de bore cubique, dont le prix élevé limite les emplois à des cas tout à fait spéciaux.

La demanderesse a découvert que certaines compositions cristallines à base d'alumine et d'oxycarbures d'aluminium possédaient une dureté et un pouvoir abrasif très supérieurs à ceux du corindon et du corindon à la zircone, et constituaient une nouvelle classe de produits à haute dureté, utilisable aussi bien pour leurs propriétés abrasives que pour leur résistance à l'usure.

Si l'on considère le diagramme $Al_2C_3$-$Al_4C_3$ tel qu'il a été publié par FOSTER et al dans J. Am. Ceram. Soc. (1956) 39, n° 1, 1-11 et reproduit dans « Phase Diagrams for Ceramists », tome 1 (1964) n° 1914 p. 524, on voit qu'il existe deux oxycarbures d'aluminium définis : $Al_2OC$ et $Al_4O_4C$. En pratique, seule la partie gauche de ce diagramme, correspondant à des compositions ne comportant pas d'$Al_4C_3$ est intéressante, dans le cas présent, car il est connu que ce carbure se décompose progressivement à l'air humide en donnant des hydrates d'aluminium et du méthane.

La demanderesse a découvert, d'une part, que l'oxycarbure $Al_4O_4C$ était stable, alors que l'oxycarbure $Al_2OC$ n'était stable qu'à haute température, mais pouvait être obtenu à l'état métastable par un refroidissement rapide du mélange initial $Al_2O_3$-$Al_4C_3$ liquide, et d'autre part, qu'il existait un eutectique $Al_2O_3$-$Al_2OC$ correspondant à 13 molécules % d'$Al_4C_3$, et dont le point de fusion est voisin de 1 800 °C, alors que le diagramme de FOSTER ne fait apparaître que le seul eutectique stable $Al_2O_3$-$Al_4O_4C$, correspondant à 10 molécules % d'$Al_4C_3$, et dont le point de fusion est à environ 1 840 °C. Le diagramme $Al_2O_3$-$Al_4C_3$ est le diagramme d'équilibre stable corrigé par la demanderesse, ci-dessous.

On peut caractériser chaque produit par son rapport : nombre d'atomes de carbone sur nombre d'atomes de carbone + d'atomes d'oxygène, soit : C/C + O, que l'on désigne par $\rho$.

Selon cette définition, on a pour les composés :

$Al_2O_3$ : $\rho = 0$
$Al_4O_4C$ : $\rho = 0,2$
$Al_2OC$ : $\rho = 0,5$
$Al_4C_3$ : $\rho = 1$

On remarque que ce rapport $\rho$ est numériquement égal à la fraction molaire d'$Al_4C_3$ dans le diagramme $Al_2O_3/Al_4C_3$.

(Voir tableau, page 3)

DIAGRAMME D'EQUILIBRE STABLE $Al_2O_3$-$Al_4C_3$

T°C

LIQUIDE   $Al_4C_3$ + LIQ.

$Al_2OC$ + LIQ.   $Al_2OC$ + $Al_4C_3$

$Al_4O_4C$ + $Al_2OC$

$Al_2O_3$ + $Al_4O_4C$   $Al_4O_4C$ + $Al_4C_3$

$Al_4O_4C$   $Al_2OC$

2100  2000  1900  1800  1700  1600  1500   % mol.

$Al_2O_3$   20   50   $Al_4C_3$

Les produits abrasifs, à haute dureté, pouvant comporter, outre l'alumine, l'un et/ou l'autre ou les deux oxycarbures, vont se répartir en sept catégories :

A. Les produits constitués par une combinaison stable $Al_2O_3$-$Al_4O_4C$ :

1. hypoeutectique, formée par une dispersion de cristaux d'alumine primaire dans la matrice eutectique $Al_2O_3$-$Al_4O_4C$ avec ρ compris entre 0,01 et 0,10
2. eutectique, avec ρ sensiblement égal à 0,10
3. hypereutectique, constituée par une dispersion de grains d'$Al_4O_4C$ dans une matrice d'eutectique $Al_2O_3$-$Al_4O_4C$ avec ρ compris entre 0,10 et 0,20

B. Les produits constitués par une combinaison métastable $Al_2O_3$-$Al_2OC$ :

4. hypoeutectique formée par une dispersion de cristaux d'alumine primaire dans une matrice eutectique $Al_2O_3$-$Al_2OC$, avec ρ compris entre 0,01 et 0,13
5. eutectique, avec ρ sensiblement égal à 0,13
6. hypereutectique, constituée par une dispersion de grains d'$Al_2OC$ dans une matrice eutectique $Al_2O_3$-$Al_2OC$ avec ρ compris entre 0,13 et 0,50
7. les produits constitués par une combinaison ternaire $Al_2O_3$-$Al_2OC$-$Al_4O_4C$ pour lesquels ρ peut varier entre 0,20 et 0,50.

Dans les différents cas, la teneur en alumine est limitée :
a) du côté des basses teneurs, par la nécessité d'avoir une proportion d'eutectique suffisante pour assurer la liaison des grains d'alumine primaire. Cette limite correspond approximativement à ρ = 0,01.
b) du côté des hautes teneurs, par la nécessité d'éviter la présence d'$Al_4C_3$, instable à l'air humide, qui apparaît, pour les états stables, au-delà de ρ = 0,20, et pour les états métastables, au-delà de ρ = 0,50. En pratique, cependant, les compositions correspondant à ρ compris entre 0,02 et 0,20 se sont révélées les plus intéressantes, et l'invention est limitée à cet intervalle de composition.
La demanderesse a découvert que les compositions abrasives, à haute dureté, que l'on vient de décrire, pouvaient être obtenues par fusion d'alumine et d'une substance carbonée et refroidissement à vitesse contrôlée. La substance carbonée peut être le carbone lui-même sous une de ses formes habituelles, par exemple le graphite, le coke, le noir de fumée, le carbone amorphe, ou un composé tel que le carbure d'aluminium $Al_4C_3$, ou même un mélange aluminium + carbone.

3

**0 022 420**

Les proportions des constituants initiaux sont calculées sur la base des équations stœchiométriques, en fonction de la composition visée. Des exemples seront donnés pour préciser la mise en œuvre de ce procédé. Bien que l'on puisse observer, au cours de la fusion, une volatilisation d'$Al_2OC$, on n'observe que de très faibles écarts entre les compositions calculées et les compositions obtenues. Selon le type de four dans lequel on opère la fusion, il peut être souhaitable d'opérer sous atmosphère de gaz inerte sec, de façon à éviter tout risque de formation de nitrures ou de carbonitrures d'aluminium, mais on peut également opérer à l'air libre.

La vitesse de refroidissement est l'élément essentiel qui détermine la structure du produit. Un refroidissement lent, par exemple de 10 à 20 °C par minute ou un refroidissement rapide suivi d'un recuit prolongé, par exemple de 24 heures à 1 500 °C, ou de 15 minutes à 1 810 °C, conduisent à la structure stable, c'est-à-dire contenant principalement les composés $Al_2O_3$ et $Al_4O_4C$.

Un refroidissement rapide de l'ordre de 50 à 100° par minute, ou au-delà, conduit à la structure métastable, c'est-à-dire contenant principalement les composés $Al_2O_3$ et $Al_2OC$.

Pour des vitesses de refroidissement intermédiaires, on peut aussi obtenir un matériau à structure ternaire complexe contenant les composés $Al_2O_3$, $Al_2OC$ et $Al_4O_4C$.

Des vitesses encore plus élevées, obtenues par exemple par coulée du liquide dans ou sur de grandes masses métalliques, de façon connue (lingotière massive refroidie, empilement de boulets métalliques), conduisent également à la structure métastable, avec une cristallisation plus fine.

Les exemples qui suivent précisent de façon non limitative les conditions de mise en œuvre de l'invention. Ils sont regroupés sur le tableau 1 (page 6).

Les exemples 1 à 6 n'appellent pas de commentaire particulier ; les exemples 7 et 8 montrent qu'une structure métastable obtenue par refroidissement rapide est ramenée à l'état stable par recuit de 15 mn à 1 810 °C. On a ensuite procédé à une série de tests pour déterminer les propriétés des compositions abrasives, à haute dureté, objets de l'invention. On a utilisé, pour cette évaluation, la machine et le mode opératoire dont le principe a été décrit par C. RAGON, L. BELON et H. FORESTIER dans « Revue de Métallurgie, Paris Juin 1969 », pages 471 à 476, et par J. L. BELON, C. RAGON et H. FORESTIER dans « Mémoires Scientifiques de la Revue Métallurgique » n° 1, 1973, pages 53 à 59.

La méthode utilisée est la suivante : pour un métal donné, on mesure la quantité enlevée sur un cylindre constitué en ce métal par un outil formé par une pyramide à trois faces, faisant un angle de 120°, taillé dans l'abrasif à étudier.

Le cylindre de métal est fixé à la périphérie d'un mandrin tournant à une vitesse périphérique de l'ordre de 30 m/s. A chaque tour de mandrin, le cylindre passe devant la pointe de l'outil étudié, qui y trace un sillon. L'outil se déplace le long d'une génératrice du cylindre et y taille une série de sillons à recouvrement contrôlé, sur toute sa longueur qui y est de 6 centimètres.

Après chaque essai, on mesure par pesée la quantité de métal enlevé et le degré d'usure de l'outil. Au début de l'essai, l'outil pyramidal présente une pointe qui, au fur et à mesure de l'usure de la pyramide, se transforme en une surface plane triangulaire. On exprime l'usure de l'outil par l'aire de cette face plane triangulaire.

Au début de l'essai, cette surface est réduite à la pointe de la pyramide dont la surface est de l'ordre de 0,005 à 0,01 $mm^2$. On se trouve dans des conditions se rapprochant d'un travail de meulage de rectification (meules à grains fins). Vers la fin de l'essai, la surface créée peut atteindre 2 $mm^2$. On est alors dans des conditions voisines d'un travail de meulage d'ébarbage (meules à gros grains).

Dans cet essai, on caractérise le travail des grains étudiés par la quantité de métal enlevée par un outil entre deux valeurs successives de l'aire de la surface triangulaire formée par l'usure.

Pour mieux visualiser les résultats de ces tests et faciliter les comparaisons entre divers abrasifs, on peut :

— d'une part, tracer un diagramme en portant en abscisses la surface S de la face triangulaire usée de l'outil, en millimètres-carrés et, en ordonnées, le volume total cumulé V de métal enlevé, en millimètres-cubes.

Pour chaque essai et pour chaque type de métal, on peut tracer une courbe caractéristique $V = f(S)$ qui est, en pratique, assimilable à une droite dont le coefficient angulaire est d'autant plus grand que l'abrasif est plus performant.

— d'autre part, retenir le coefficient angulaire de chaque courbe comme « coefficient de qualité » $\lambda$ de l'abrasif, utilisé dans des conditions données, coefficient qui, étant un rapport Volume/Surface, est exprimé en millimètres.

(Voir tableau, page 5)

4

Tableau 1

| EXEM-PLES | MELANGE INITIAL FONDU | | | TEMPERATURE AT-TEINTE PENDANT LA FUSION (°C) | VITESSE DE RE-FROIDISSEMENT EN °C/mn | RECUIT EVENTUEL | STRUCTURE OBSERVEE |
|---|---|---|---|---|---|---|---|
| | | mol. % | $\rho$ visé | poids % | | | | |
| 1 | $Al_2O_3$ $Al_4C_3$ | 95 5 | 0,05 | 93,1 6,9 | 1970°C | 15 | – | Dispersion $Al_2O_3$ primaire dans matrice eutectique $Al_2O_3$-$Al_4O_4C$ |
| 2 | $Al_2O_3$ $Al_4C_3$ | 90 10 | 0,10 | 86,4 13,6 | 1910 | 15 | – | Caractéristique d'un eutectique ($Al_2O_3$ – $Al_4O_4C$) |
| 3 | $Al_2O_3$ $Al_4C_3$ | 80 20 | 0,20 | 73,9 26,1 | 1920 | 15 | – | Grains d'$Al_4O_4C$ dans matrice eutectique $Al_2O_3$ – $Al_4O_4C$ |
| 4 | $Al_2O_3$ $Al_4C_3$ | 90 10 | 0,10 | 86,4 13,6 | 1950 | 70 | – | Dispersion $Al_2O_3$ primaire dans matrice eutectique $Al_2O_3$-$Al_2OC$ |
| 5 | $Al_2O_3$ $Al_4C_3$ | 87 13 | 0,13 | 82,6 17,4 | 1950 | 70 | – | Caractéristique d'un eutectique ($Al_2O_3$ – $Al_2OC$) |
| 6 | $Al_2O_3$ $Al_4C_3$ | 80 20 | 0,20 | 73,9 26,1 | 1950 | 70 | – | Grains d'$Al_2OC$ dans matrice eutectique $Al_2O_3$ – $Al_2OC$ |
| 7 | $Al_2O_3$ $Al_4C_3$ | 92 8 | 0,08 | 89,1 10,9 | 1950 | 70 | 15 mn à 1810°C | Alumine primaire dans eutectique coalescé $Al_2O_3$ – $Al_4O_4C$ |
| 8 | $Al_2O_3$ $Al_4C_3$ | 80 20 | 0,20 | 73,9 26,1 | 1950 | 70 | 15 mn à 1810°C | Grains $Al_4O_4C$ dans eutectique coalescé $Al_2O_3$ – $Al_4O_4C$ |

**0 022 420**

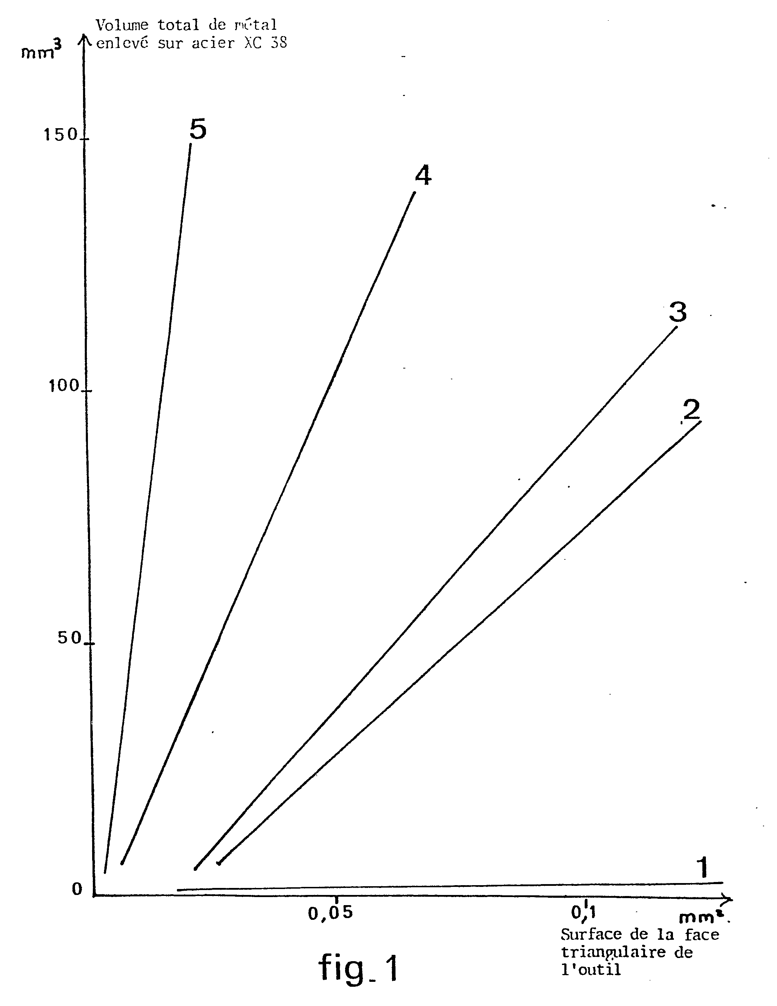

La figure 1 représente une série de courbes concernant des outils en bauxite frittée, en corindon à la zircone et à base de compositions selon l'invention.

Le tableau 2 (page 8) indique pour les huit produits correspondant aux exemples du tableau 1 :

— la dureté KNOOP sous une charge de 4 daN appliquée pendant 20 secondes (dureté exprimée en $daN/mm^2$-colonne n° 1),

— le coefficient de qualité « $\lambda$ » des huit produits essayés d'une part sur un acier au carbone XC38, non traité (colonne n° 2), et d'autre part, sur un acier inoxydable ferritique Z10 CF 17 (colonne n° 3).

Compositions :

$$C\ 0{,}35/0{,}40\ \%$$
$$XC\ 38\quad Mn\ 0{,}50/0{,}80\ \%$$
$$Si\ 0{,}10/0{,}40\ \%$$

$$C \leqslant 0{,}12\ \%$$
$$Mn \leqslant 1{,}5\ \%$$
$$Si \leqslant 1{,}0\ \%$$

Z10 CF17
$$Cr \leqslant 16 \quad \text{à } 18\ \%$$
$$Ni \leqslant 0{,}5\ \%$$

Sur la figure 1, les courbes correspondent aux abrasifs suivants, utilisés en enlèvement de métal sur un acier XC 38 :

— courbe 1 : bauxite frittée ($\lambda$ = 6 mm)
— courbe 2 : corindon à la zircone ($\lambda$ = 800 mm)
— courbe 3 : abrasif selon l'invention, n° 3 tableau 1 ($\lambda$ = 1 130 mm)
— courbe 4 : abrasif selon l'invention, n° 6 tableau 1 ($\lambda$ = 2 080 mm)
— courbe 5 : abrasif selon l'invention, n° 4 tableau 1 ($\lambda$ = 6 200 mm)

## Tableau 2

| REFERENCE PRODUIT ABRASIF (Tableau 1) | (1) Dureté KNOOP $daN/mm^2$ | (2) COEFFICIENT DE QUALITE EN ABRASION $\lambda$ (mm) XC 38 | (3) $\lambda$ (mm) Z10 CF 17 |
|---|---|---|---|
| hypo 1) | 1140 | 1060 | 340 |
| eutectique 2) stables | 1130 | 1300 | 560 |
| hyper 3) | 900 | 1130 | 650 |
| hypo 4) métas- | 1280 | 6200 | 3800 |
| eutectique 5) tables | 1250 | 1740 | 510 |
| hyper 6) | 1220 | 2080 | 420 |
| 7) métas- tables | 1020 | 1610 | 550 |
| 8) recuits | 950 | 1520 | 410 |
| bauxite frittée | 740 | 6 | 30 |
| corindon à la zircone | 1350 | 800 | 250 |

On constate la supériorité des compositions, objets de l'invention sur les abrasifs classiques et, en particulier, la composition n° 4 dont les caractéristiques sont tout à fait extraordinaires et laissent loin derrière elle les meilleurs abrasifs utilisés à l'heure actuelle.

Il faut également noter que les compositions abrasives dites « métastables » possèdent, même dans les conditions de travail les plus sévères, une stabilité totale, et que la transformation de la structure métastable en structure stable ne se produit que par maintien prolongé à des températures supérieures à 1 500 °C.

6

Ces nouvelles compositions à haute dureté conviennent en tant qu'abrasifs aussi bien pour les travaux grossiers d'ébarbage que pour les travaux fins de meulage et de rectification. Dans tous les cas, les quantités de métal enlevées par l'outil sont très supérieures à celles enlevées par les autres abrasifs, si on les rapporte à une même quantité d'abrasif consommé.

Elles peuvent être utilisées sous toutes les formes connues et en vue de toutes les applications mettant à profit leur haute dureté et/ou leur pouvoir abrasif. Citons à titre non limitatif :

— abrasifs agglomérés pour disques de tronçonnage, meules de rectification ou d'ébarbage,
— abrasifs appliqués pour toiles et papiers d'usinage ou de polissage,
— poudres pour le rodage, le sciage,
— fragments pour les travaux de finition mécanique de surface, tels que le grenaillage ou le tonnelage,
— pièces massives ou pièces rapportées devant résister à l'usure telles que les filières et matrices, les guide-fils, les plaquettes d'usinage par coupe.

Dans ces cas, les pièces peuvent être obtenues à la forme par coulée de liquide dans des moules refroidis.

Les applications possibles relèvent ainsi soit des travaux de transformation et usinage des métaux, soit des travaux sur les matières minérales (forage, sciage des roches par exemple), ou soit même des industries de construction d'équipement comportant des sollicitations d'usure importantes.

**Revendications**

1. Procédé de préparation de produits abrasifs à haute dureté, constitué par la combinaison de phases cristallines d'alumine et au moins un des deux oxycarbures d'aluminium $Al_2OC$ et $Al_2O_4C$, procédé selon lequel on fond un mélange d'alumine et d'une substance carbonée, caractérisé en ce que le mélange alumine + substance carbonée est effectué dans une proportion correspondant, dans le diagramme d'état, $Al_2O_3 + Al_4C_3$ à une fraction moléculaire d'$Al_4C_3$ comprise entre 0,02 et 0,20, et en ce que le mélange fondu est refroidi à une vitesse contrôlée de 10 à plus de 100 °C par minute.

2. Procédé, selon revendication 1, caractérisé en ce que la vitesse de refroidissement est égale ou inférieure à 20 °C par minute, de façon à obtenir la structure stable essentiellement constituée d'$Al_2O_3$ et d'$Al_4O_4C$.

3. Procédé, selon revendication 1, caractérisé en ce que la vitesse de refroidissement est égale ou supérieure à 50 °C par minute, de façon à obtenir la structure métastable essentiellement constituée d'$Al_2O_3$ et d'$Al_2OC$.

4. Procédé, selon revendication 1, caractérisé en ce que la vitesse de refroidissement est comprise entre 20 et 50 °C par minute, de façon à obtenir la même structure mixte, constituée d'$Al_2O_3$, $Al_4O_4C$ et $Al_2OC$.

5. Procédé, selon revendication 1, caractérisé en ce que le produit est refroidi à une vitesse égale ou supérieure à 50 °C par minute, puis recuit pendant une durée de 15 mn à 24 h, à une température comprise entre 1 500 et 1 810 °C, en vue d'obtenir la structure stable, essentiellement constituée d'$Al_2O_3$ et d'$Al_4O_4C$.

6. Procédé de préparation de produits abrasifs à haute dureté selon revendications 1 à 5, caractérisé en ce que la substance carbonée est du carbone, notamment du graphite, coke, noir de fumée, carbone amorphe.

7. Procédé de préparation de produits abrasifs à haute dureté selon l'une quelconque des revendications 1 à 6, caractérisé en ce que la substance carbonée est du carbure d'aluminium $Al_4C_3$.

8. Procédé de préparation de produits abrasifs à haute dureté selon l'une quelconque des revendications 1 à 7, caractérisé en ce que la substance carbonée est un mélange de carbone et d'aluminium.

9. Procédé de préparation de produits abrasifs à haute dureté selon l'une quelconque des revendications 1 à 8, caractérisé en ce que la fusion est opérée sous un gaz inerte sec.

10. Procédé de préparation de produits abrasifs à haute dureté selon l'une quelconque des revendications 1 à 9, caractérisé en ce que la fusion et au moins le début du refroidissement sont opérés sous gaz inerte sec.

11. Procédé de préparation de produits abrasifs à haute dureté selon l'une quelconque des revendications 1 à 10, caractérisé en ce que le produit fondu est coulé, de façon connue, sur ou dans une grande masse métallique.

12. Application des produits abrasifs à haute dureté, obtenus selon le procédé décrit dans l'une quelconque des revendications 1 à 11, à tous travaux d'enlèvement de matière tels que meulage, rectification, usinage, ébarbage, écroûtage, décapage, perçage, sciage, forage, sous forme d'abrasifs agglomérés ou appliqués ou à l'état de poudre ou de plaquettes de coupe, ainsi qu'à la confection de pièces résistant à l'usure telles que filières, matrices, guide-fils.

7

**Claims**

1. A process for preparing very hard abrasive products formed by the combination of crystalline phases of alumina and at least one of the two aluminium oxycarbides $Al_2OC$ and $Al_2O_4C$, wherein a mixture of alumina and a carbonaceous substance is melted, characterised in that the alumina + carbonaceous substance mixture is produced in a proportion which, in the phase diagram $Al_2O_3 + Al_4C_3$ corresponds to a molecular fraction of $Al_4C_3$ of from 0.02 to 0.20, and that the molten mixture is cooled at a controlled speed of 10 to more than 100 °C per minute.

2. A process according to claim 1, characterised in that the cooling speed is equal to or less than 20 °C per minute, so as to produce the stable structure essentially comprising $Al_2O_3$ and $Al_4O_4C$.

3. A process according to claim 1, characterised in that the cooling speed is equal to or higher than 50 °C per minute, so as to produce the metastable structure esentially comprising $Al_2O_3$ and $Al_2OC$.

4. A process according to claim 1, characterised in that the cooling speed is from 20 to 50 °C per minute so as to produce the same mixed structure comprising $Al_2O_3$, $Al_4O_4C$ and $Al_2OC$.

5. A process according to claim 1, characterised in that the product is cooled at a speed which is equal to or higher than 50 °C per minute, then reheated for a period of from 15 minutes to 24 hours at a temperature of from 1 500 to 1 810 °C, in order to produce the stable structure essentially comprising $Al_2O_3$ and $Al_4O_4C$.

6. A process for preparing very hard abrasive products according to claims 1 to 5, characterised in that the carbonaceous substance is carbon, in particular graphite, coke, lamp black or amorphous carbon.

7. A process for preparing very hard abrasive products according to any one of claims 1 to 6, characterised in that the carbonaceous substance is aluminium carbide $Al_4C_3$.

8. A process for preparing very hard abrasive products according to any one of claims 1 to 7, characterised in that the carbonaceous substance is a mixture of carbon and aluminium.

9. A process for preparing very hard abrasive products according to any one of claims 1 to 8, characterised in that the melting operation is performed under a dry inert gas.

10. A process for preparing very hard abrasive products according to any one of claims 1 to 9, characterised in that the melting operation and at least the beginning of the cooling operation are performed under a dry inert gas.

11. A process for preparing very hard abrasive products according to any one of claims 1 to 10, characterised in that the molten product is poured in known manner over or in a large metal mass.

12. Use of the very hard abrasive products produced in accordance with the process set forth in any one of claims 1 to 11 for any material removal operations such as grinding, trueing by grinding, machining, trimming, crust removal, scouring, piercing, sawing, or drilling, in the form of agglomerated or applied abrasives or abrasives in the state of a powder or cutting plates, and for the production of wear-resistant components such as dies, formers or moulds, and wire guides.

**Ansprüche**

1. Verfahren zur Herstellung von Schleifprodukten hoher Härte, bestehend aus der Kombination von kristallinen Phasen von Aluminiumoxid und wenigstens einem der beiden Aluminiumoxicarbide $Al_2OC$ und $Al_2O_4C$, gemäß welchem Verfahren man ein Gemisch von Aluminiumoxid und einem kohlenstoffhaltigen Stoff schmilzt, dadurch gekennzeichnet, daß das Gemisch Aluminiumoxid + kohlenstoffhaltiger Stoff in einem Anteilsverhältnis eingesetzt wird, das im Zustandsdiagramm $Al_2O_3 + Al_4C_3$ einer Molfraktion von $Al_4C_3$ zwischen 0,02 und 0,20 entspricht, und daß das geschmolzene Gemisch mit einer gesteuerten Geschwindigkeit von 10 bis mehr als 100 °C je Minute abgekühlt wird.

2. Verfahren nach Anspruch 1, dadurch gekennzeichnet, daß die Abkühlungsgeschwindigkeit gleich oder unter 20 °C/min derart ist, um das im wesentlichen aus $Al_2O_3$ und $Al_4O_4C$ bestehende stabile Gefüge zu erhalten.

3. Verfahren nach Anspruch 1, dadurch gekennzeichnet, daß die Abkühlungsgeschwindigkeit gleich oder über 50 °C/min derart ist, um das im wesentlichen aus $Al_2O_3$ und $Al_2OC$ bestehende metastabile Gefüge zu erhalten.

4. Verfahren nach Anspruch 1, dadurch gekennzeichnet, daß die Abkühlungsgeschwindigkeit zwischen 20 und 50 °C/min derart liegt, um das aus $Al_2O_3$, $Al_4O_4C$ und $Al_2OC$ bestehende gleiche Mischgefüge zu erhalten.

5. Verfahren nach Anspruch 1, dadurch gekennzeichnet, daß das Produkt mit einer Geschwindigkeit gleich oder über 50 °C/min abgekühlt und dann während einer Dauer von 15 min bis 24 bei einer Temperatur zwischen 1 500 und 1 810 °C geglüht wird, um das im wesentlichen aus $Al_2O_3$ und $Al_4O_4C$ bestehende stabile Gefüge zu erhalten.

6. Verfahren zur Herstellung von Schleifprodukten hoher Härte nach Ansprüchen 1 bis 5, dadurch gekennzeichnet, daß der kohlenstoffhaltige Stoff insbesondere Kohlenstoff, Graphit, Koks, Ruß, amorpher Kohlenstoff ist.

7. Verfahren zur Herstellung von Schleifprodukten nach irgendeinem der Ansprüche 1 bis 6, dadurch gekennzeichnet, daß der kohlenstoffhaltige Stoff Aluminiumkarbid $Al_4C_3$ ist.

8. Verfahren zur Herstellung von Schleifprodukten nach irgendeinem der Ansprüche 1 bis 7, dadurch gekennzeichnet, daß der kohlenstoffhaltige Stoff ein Gemisch von Kohlenstoff und Aluminium ist.

9. Verfahren zur Herstellung von Schleifprodukten nach irgendeinem der Ansprüche 1 bis 8, dadurch gekennzeichnet, daß das Schmelzen unter einem inerten trockenen Gas durchgeführt wird.

10. Verfahren zur Herstellung von Schleifprodukten nach irgendeinem der Ansprüche 1 bis 9, dadurch gekennzeichnet, daß das Schmelzen und wenigstens der Beginn der Abkühlung unter inertem trockenem Gas durchgeführt werden.

11. Verfahren zur Herstellung von Schleifprodukten nach irgendeinem der Ansprüche 1 bis 10, dadurch gekennzeichnet, daß das geschmolzene Produkt in bekannter Weise auf oder in eine große metallische Masse gegossen wird.

12. Verwendung der nach dem in irgendeinem der Ansprüche 1 bis 11 beschriebenen Verfahren erhaltenen Schleifprodukte hoher Härte für alle Materialabtragungsarbeiten, wie z. B. Schleifen, Oberflächenverbesserung, spanende Formgebung, Entgraten, Schälen, Dekapieren Bohren, Sägen, Stoßbohren, in Form von agglomerierten Schleifmitteln oder von entweder im Pulver- oder Schneidplattenzustand angewandten Schleifmitteln, sowie für die Anfertigung von verschleißfesten Teilen, wie z. B. Ziehdüsen, Matrizen, Fadenführer.

Volume total de métal
enlevé sur acier XC 38

fig_1

Surface de la face
triangulaire de
l'outil